# EUROPEAN PATENT APPLICATION

(11) **EP 4 600 397 A1**
(43) Date of publication of application: **13.08.2025**
(21) Application number: 23914763.0
(22) Date of filing: 18.12.2023
(51) Int. Cl.: C22C 38/00, B23K 11/16, C21D 9/46, C21D 9/50, C22C 38/60

(54) **STEEL PLATE, RESISTANCE SPOT WELDING METHOD, RESISTANCE SPOT WELDING MEMBER, AND METHOD FOR MANUFACTURING STEEL PLATE**

(30) Priority: 05.01.2023 JP 2023000728
(71) Applicant: JFE Steel Corporation, Tokyo 100-0011 (JP)
(72) Inventor: TAKASHIMA, Katsutoshi, Tokyo 100-0011 (JP); KAWABE, Nao, Tokyo 100-0011 (JP); ENDO, Reiko, Tokyo 100-0011 (JP); KIM, Jingeum, Tokyo 100-0011 (JP); YAMAMOTO, Shunsuke, Tokyo 100-0011 (JP)
(74) Representative: Hoffmann Eitle
(86) International application number: PCT/JP2023/045368
(87) International publication number: WO 2024/147276

(57) **Abstract**

Provided is a steel sheet that combines a tensile strength of 1450 MPa or more with high levels of formability (hole expansion formability) and weldability (wide range of appropriate current, cross tensile strength). The steel sheet has a defined chemical composition, and a microstructure at a 1/4 sheet thickness position and a microstructure in a range from the surface of the steel sheet to a depth of 7 µm each satisfy specified conditions, and in a range of 50 µm to 100 µm in depth from a surface, a number density of Ti precipitates having a particle size of 0.005 µm or more to less than 0.10 µm and Nb precipitates having a particle size of 0.005 µm or more to less than 0.10 µm is 20/100 µm² or more.

## Description

### TECHNICAL FIELD

The present disclosure relates to steel sheets, and in particular, to a steel sheet that can be suitably used as material for structural parts of automobiles and the like. Further, the present disclosure relates to a resistance spot welding method using the steel sheet, a resistance spot welded member, and a method of producing the steel sheet.

### BACKGROUND

In recent years, CO₂ emission regulations have become more stringent due to rising environmental problems, and in the automobile field, weight reduction of automotive bodies has become an issue in increasing fuel efficiency. Therefore, sheet metal thinning is being promoted through the application of high strength steel sheets to automotive parts, in particular steel sheets that have a tensile strength (TS) of 1450 MPa or more.

However, high strength steel sheets used for structural parts and reinforcing members of automobiles are required to have not only high strength but also excellent formability. In particular, steel sheets are required to have excellent hole expansion formability in order to be used as material for parts having complex shapes.

However, to secure a tensile strength of 1450 MPa or more, a large amount of alloying elements need to be added to steel sheets. The addition of alloying elements decreases hole expansion formability, and therefore achieving both high strength and excellent hole expansion formability has been difficult.

Further, resistance spot welding is widely used in automobile production for cost and production efficiency reasons. However, the addition of alloying elements decreases resistance spot weldability (hereinafter also referred to simply as "weldability") of steel sheets. Specifically, when large amounts of alloying elements are added, the appropriate current range to obtain a required nugget diameter by resistance spot welding becomes extremely narrow. Further, cross tensile strength (CTS) of a joint after resistance spot welding is significantly decreased. Accordingly, achieving both high strength and excellent weldability has been difficult.

Therefore, various methods are being considered to solve the above problems.

For example, in Patent Literature (PTL) 1, a method is proposed to improve the weldability of high strength steel sheets by adjusting welding conditions.

Further, in Patent Document 2, a method is proposed to improve formability and weldability of high strength steel sheets by controlling microstructure.

### CITATION LIST

### Patent Literature

PTL 1: JP 2011-005544 A
PTL 2: JP 2008-231541 A

### SUMMARY

### (Technical Problem)

According to the method proposed in PTL 1, occurrence of shrinkage defects and cracks in weld metal can be suppressed. However, appropriate current range and cross tensile strength are not improved by the method. Further, the method requires further pressurization and current passage under specific conditions after welding current passage, which increases the time required for welding and decreases productivity. Further, the method proposed in PTL 1 is a method of adjusting welding conditions, and therefore does not contribute to improving the formability of steel sheets.

Further, according to the method proposed in PTL 2, a certain degree of improvement in formability and weldability is observed. However, the tensile strength of a steel sheet obtained by the method of PTL 2 is less than 1000 MPa, and a tensile strength of 1450 MPa or more has not been achieved. Further, as mentioned above, excellent hole expansion formability is required for the production of members that have complex shapes. However, in PTL 2, elongation (El) is used as an index of formability of steel sheets, and hole expansion formability is not considered.

Thus, it has not yet been possible to realize a steel sheet that combines a tensile strength of 1450 MPa or more with high levels of formability (hole expansion formability) and weldability (wide range of appropriate current, cross tensile strength).

In view of the above, it would be helpful to provide a steel sheet that combines a tensile strength of 1450 MPa or more with high levels of formability (hole expansion formability) and weldability (wide range of appropriate current, cross tensile strength).

### (Solution to Problem)

As a result of studies to solve the problems described above, the inventors discovered that a steel sheet that meets the requirements described above is obtainable by controlling a volume fraction of martensite in a steel sheet surface layer and a number density of fine Ti precipitates and Nb precipitates in the steel, in addition to controlling the chemical composition of the steel sheet.

The present disclosure is based on the discoveries described above, and primary features of the present disclosure are as described below.
1. A steel sheet comprising a chemical composition containing (consisting of), in mass%,
   C: 0.18 % to 0.38 %,
   Si: 0.2 % to 1.8 %,
   Mn: 2.4 % to 3.5 %,
   P: 0.03 % or less,
   S: 0.003 % or less,
   Al: 0.01 % to 0.50 %,
   N: 0.008 % or less,
   one or both of Nb: 0.005 % to 0.08 % and Ti: 0.005 % to 0.08 %, and
   one or both of B: 0.0002 % to 0.0050 % and Sb: 0.001 % to 0.012 %,
   with the balance being Fe and inevitable impurity, wherein
   a value of A as defined by Expression (1) below is from 0.9 to 6.0,
   microstructure at a 1/4 sheet thickness position satisfies the following conditions:
      volume fraction of martensite: 93 % or more,
      volume fraction of ferrite: 0 % to 5 %,
      volume fraction of retained austenite: 0 % to 7 %,
      average grain size of martensite: 7 µm or less,
      average grain size of ferrite: 3 µm or less, and
      average grain size of retained austenite: 3 µm or less,
   microstructure in a range from a surface to a depth of 7 µm satisfies the following condition:
      volume fraction of martensite: 0 % to 20 %, and
   in a range of 50 µm to 100 µm in depth from a surface, a number density of Ti precipitates having a particle size of 0.005 µm or more to less than 0.10 µm and Nb precipitates having a particle size of 0.005 µm or more to less than 0.10 µm is 20/100 µm² or more, $A = \left(\left[C\right]+\left[Si\right]/8+\left[Mn\right]/20\right) / \left(2\times \left(\left[Ti\right]+\left[Nb\right]\right)+85\times \left(\left[B\right]+\left[Sb\right]/20\right)\right.$
   where the square brackets in Expression (1) represent content in mass% of an element enclosed in the square brackets and have a value of 0 when the element is not contained.
2. The steel sheet according to 1, above, wherein the chemical composition further contains, in mass%, at least one selected from the group consisting of
   V: 0.05 % or less,
   Cu: 0.50 % or less,
   Ni: 0.50 % or less,
   Mo: 0.50 % or less,
   Cr: 0.50 % or less,
   Sn: 0.30 % or less,
   Ca: 0.0050 % or less, and
   REM: 0.0050 % or less.
3. The steel sheet according to 1 or 2, above, further comprising a zinc or zinc alloy coated or plated layer on at least one surface.
4. A resistance spot welding method of squeezing, by a pair of welding electrodes, a sheet combination including at least one sheet of the steel sheet according to any one of 1 to 3, above, and passing a current while applying an electrode force to join the sheet combination.
5. A resistance spot welded member including at least one sheet of the steel sheet according to any one of 1 to 3, above, in a sheet combination.
6. A method of producing a steel sheet, the method comprising:
   continuous casting of molten steel having the chemical composition according to 1 or 2, above, to obtain a steel slab;
   cooling the steel slab at an average cooling rate of 100 °C/h or more in a temperature range to 600 °C;
   reheating the steel slab after the cooling by heating the steel slab to a reheating temperature of 1250 °C to 1450 °C and holding at the reheating temperature for a hold time of 60 min or more;
   hot rolling the steel slab after the reheating under a set of conditions including a rolling finish temperature of 850 °C to 950 °C, to obtain a hot-rolled steel sheet;
   cooling the hot-rolled steel sheet to a cooling stop temperature of 480 °C or less at an average cooling rate of 80 °C/s or more;
   coiling the hot-rolled steel sheet after the cooling at a coiling temperature of 480 °C or less;
   cold rolling the hot-rolled steel sheet to obtain a cold-rolled steel sheet; and
   annealing the cold-rolled steel sheet in an atmosphere where the dew point is above -20 °C, where,
   in the annealing, the cold-rolled steel sheet is
      heated to an annealing temperature of 780 °C to 980 °C at an average heating rate from 3 °C/s to 30°C/s,
      held at the annealing temperature for a hold time from 15 s to 360 s, and
      cooled from the annealing temperature to room temperature at an average cooling rate of 3 °C/s or more.
7. The method of producing a steel sheet according to 6, above, the method further comprising electroplating the steel sheet after annealing to form a zinc or zinc alloy plated layer on at least one surface of the steel sheet.
8. A method of producing a steel sheet, the method comprising:
   continuous casting of molten steel having the chemical composition according to 1 or 2, above, to obtain a steel slab;
   cooling the steel slab at an average cooling rate of 100 °C/h or more in a temperature range to 600 °C;
   reheating the steel slab after the cooling by heating the steel slab to a reheating temperature of 1250 °C to 1450 °C and holding at the reheating temperature for a hold time of 60 min or more;
   hot rolling the steel slab after the reheating under a set of conditions including a rolling finish temperature of 850 °C to 950 °C, to obtain a hot-rolled steel sheet;
   cooling the hot-rolled steel sheet to a cooling stop temperature of 480 °C or less at an average cooling rate of 80 °C/s or more;
   coiling the hot-rolled steel sheet after the cooling at a coiling temperature of 480 °C or less;
   cold rolling the hot-rolled steel sheet to obtain a cold-rolled steel sheet;
   annealing the cold-rolled steel sheet in an atmosphere where the dew point is above -20 °C;
   hot-dip coating, in which the steel sheet after the annealing is immersed in a hot-dip coating bath, to form a zinc or zinc alloy coated layer on at least one surface of the steel sheet; and
   cooling the steel sheet after the hot-dip coating to room temperature at an average cooling rate of 3 °C/s or more, where,
   in the annealing, the cold-rolled steel sheet is
      heated to an annealing temperature of 780 °C to 980 °C at an average heating rate from 3 °C/s to 30°C/s,
      held at the annealing temperature for a hold time from 15 s to 360 s, and
      cooled from the annealing temperature up to entry into the hot-dip coating bath at an average cooling rate of 3 °C/s or more.
9. The method of producing a steel sheet according to 8, above, wherein an alloying treatment is carried out after the hot-dip coating, prior to the cooling to room temperature.

### (Advantageous Effect)

According to the present disclosure, a steel sheet is provided that combines a tensile strength of 1450 MPa or more with high levels of formability (hole expansion formability) and weldability (wide range of appropriate current, cross tensile strength).

### DETAILED DESCRIPTION

The following describes embodiments of the present disclosure. The following merely describes preferred embodiments of the present disclosure, and the present disclosure is by no means limited to the embodiments described. Further, the unit of content "%" represents "mass%" unless otherwise specified.

### [Chemical composition]

The steel sheet according to the present disclosure has the chemical composition described above. The reasons for limiting the chemical composition are described below.

### C: 0.18 % to 0.38 %

C is an element that contributes to formation of martensite, a hard phase, and addition of C is essential to obtain a desired tensile strength. Further, C reacts with Ti and Nb to form precipitates. Therefore, the addition of C is important to obtain a desired number density of precipitates. When C content is less than 0.18 %, a required volume fraction of martensite cannot be secured. The C content is therefore 0.18 % or more. The C content is preferably 0.19 % or more. On the other hand, when the C content exceeds 0.38 %, toughness of nuggets after spot welding decreases, resulting in decreased cross tensile strength. The C content is therefore 0.38 % or less. The C content is preferably 0.34 % or less.

### Si: 0.2 % to 1.8 %

Si is an element that has an effect of improving weldability. This is because addition of Si mitigates Mn segregation, resulting in decreased hardness variation in the thickness direction. To achieve this effect, Si content is 0.2 % or more. The Si content is preferably 0.3 % or more. On the other hand, when the Si content exceeds 1.8 %, liquid metal embrittlement develops during resistance spot welding. The Si content is therefore 1.8 % or less. The Si content is preferably 1.6 % or less.

### Mn: 2.4 % to 3.5 %

Mn is an element that contributes to strength improvement of the steel sheet through solid solution strengthening and formation of a hard phase. Further, Mn is an element that stabilizes austenite and is necessary for hard phase fraction control. To achieve these effects, Mn content is 2.4 % or more. On the other hand, when the Mn content is higher than 3.5 %, the toughness of nuggets after spot welding decreases, and therefore cross tensile strength decreases. In addition, when hydrogen enters the steel sheet, grain boundary sliding constraints increase, and crack propagation at crystal grain boundaries becomes more likely. As a result, delayed fracture resistance after resistance welding is decreased. The Mn content is therefore 3.5 % or less. The Mn content is preferably 3.2 % or less.

### P: 0.03 % or less

When P content is higher than 0.03 %, segregation of P to grain boundaries becomes more pronounced. And as a result, grain boundaries become embrittled and resistance weldability is decreased. The P content is therefore 0.03 % or less. The P content is preferably 0.02 % or less. A lower limit of the P content is not particularly limited, and may be 0 %. However, excessive reduction in the P content increases steelmaking costs, and therefore the P content is preferably 0.005 % or more.

### S: 0.003 % or less

When S content is higher than 0.003 %, resistance weldability is decreased. This is due to formation of large amounts of sulfides such as MnS and formation of cracks that have the sulfides as initiation points during hydrogen entry. The S content is therefore 0.003 % or less. The S content is preferably 0.002 % or less. A lower limit of the S content is not particularly limited, and may be 0 %. However, excessive reduction in the S content increases steelmaking costs, and therefore the S content is preferably 0.0002 % or more.

### Al: 0.01 % to 0.50 %

Al is a necessary element for deoxidation. When Al content is less than 0.01 %, a deoxidizing effect is insufficient. The Al content is therefore 0.01 % or more. The Al content is preferably 0.02 % or more. On the other hand, when the Al content is higher than 0.50 %, excessive ferrite phase is formed during annealing, and therefore securing strength becomes difficult. The Al content is therefore 0.50 % or less. The Al content is preferably 0.45 % or less.

### N: 0.008 % or less

N is an element that degrades hole expansion formability by forming coarse nitrides. When N content is higher than 0.008 %, hole expansion formability degrades significantly. The N content is therefore 0.008 % or less. The N content is preferably 0.007 % or less. A lower limit of the N content is not particularly limited, and may be 0 %. However, excessive reduction in the N content increases steelmaking costs, and therefore the N content is preferably 0.001 % or more.

The chemical composition of the steel sheet according to the present disclosure contains one or both of Nb and Ti in the following amounts. Nb and Ti are elements that share a common function of improving resistance weldability by forming fine carbonitrides.

### Nb: 0.005 % to 0.08 %

Nb is an element that has an effect of improving resistance weldability by forming fine carbonitrides. When Nb is added, in order to obtain this effect, Nb content is 0.005 % or more. The Nb content is preferably 0.01 % or more. On the other hand, adding a large amount of Nb not only significantly decreases elongation but also causes slab cracking after continuous casting. The Nb content is therefore 0.08 % or less. The Nb content is preferably 0.07 % or less. The Nb content is more preferably 0.05 % or less.

### Ti: 0.005 % to 0.08 %

Ti is an element that, like Nb, has an effect of improving resistance weldability by forming fine carbonitrides. When Ti is added, in order to obtain this effect, Ti content is 0.005 % or more. The Ti content is preferably 0.008 % or more. On the other hand, adding a large amount of Ti significantly decreases elongation. The Ti content is therefore 0.08 % or less. The Ti content is preferably 0.07 % or less. Ti also has an effect of helping prevent B from reacting with N. Further, fine Ti carbonitrides serve as hydrogen trapping sites and increase hydrogen overvoltage, thus improving delayed fracture resistance after resistance welding. From the viewpoint of obtaining these effects, Ti is preferably added in the amount described above.

The chemical composition of the steel sheet according to the present disclosure contains one or both of B and Sb in the following amounts. B and Sb are elements that share a common function of increasing cross tensile strength by grain boundary strengthening.

### B: 0.0002 % to 0.0050 %

B is an element that has an effect of strengthening grain boundaries by segregating to grain boundaries, and the addition of B can improve cross tensile strength. When B is added, in order to obtain these effects, B content is 0.0002 % or more. The B content is preferably 0.0004 % or more. On the other hand, when the B content exceeds 0.0050 %, the effects are saturated and hole expansion formability decreases due to the increase in the amount of B segregating to grain boundaries. The B content is therefore 0.0050 % or less. The B content is preferably 0.0040 % or less. B also contributes to further strength improvement of the steel sheet by improving hardenability and generating a hard phase. Further, B is an element that can improve hardenability without lowering martensite start temperature. From the viewpoint of obtaining these effects, B is preferably added in the amount described above.

### Sb: 0.001 % to 0.012 %

Sb, like B, is an element that has an effect of strengthening grain boundaries by segregating to grain boundaries, and the addition of Sb can improve cross tensile strength. When Sb is added, in order to obtain these effects, Sb content is 0.001 % or more. The Sb content is preferably 0.002 % or more. On the other hand, Sb has an action of preventing decarburization of the steel sheet surface layer, and therefore when the Sb content exceeds 0.012 %, the defined steel sheet microstructure of the surface layer cannot be obtained, resulting in decreased resistance weldability. The Sb content is therefore 0.012 % or less. The Sb content is preferably 0.010 % or less.

The steel sheet according to an embodiment of the present disclosure has a chemical composition that consists of the above components, with the balance being Fe and inevitable impurity.

When Co is included as inevitable impurity, the Co content is preferably 0.10 % or less. When Zn is included as inevitable impurity, the Zn content is preferably 0.10 % or less.

Further, in addition to the above components, the chemical composition of the steel sheet according to another embodiment of the present disclosure may optionally contain at least one of the following components. All of the following elements may optionally be added and therefore are not required elements. Accordingly, a lower limit of content may be 0 %.

### V: 0.05 % or less

V is an element that has an effect of further increasing strength by forming fine carbonitrides. However, when V content exceeds 0.05 %, the effect of the addition is saturated and the effect is not commensurate with the increase in alloy cost. Therefore, when V is added, the V content is 0.05 % or less. The V content is preferably 0.04 % or less. From the viewpoint of enhancing the effect of V addition, the V content is preferably 0.005 % or more.

### Cr: 0.50 % or less

Cr is an element that has an effect of further increasing strength by generating a hard phase. However, when Cr content exceeds 0.50 %, surface defects become more likely. Therefore, when Cr is added, the Cr content is 0.50 % or less. The Cr content is preferably 0.45 % or less. On the other hand, from the viewpoint of enhancing the effect of Cr addition, the Cr content is preferably 0.02 % or more. The Cr content is more preferably 0.05 % or more.

### Sn: 0.30 % or less

Sn is an element that increases hydrogen overvoltage of the steel sheet, thereby further improving delayed fracture resistance. However, when Sn content exceeds 0.30 %, the effect is saturated and ductility is reduced. Therefore, when Sn is added, the Sn content is 0.30 % or less. The Sn content is preferably 0.25 % or less. On the other hand, from the viewpoint of enhancing the effect of adding Sn, the Sn content is preferably 0.005 % or more. The Sn content is more preferably 0.01 % or more.

### Mo: 0.50 % or less

Mo, like Cr, is an element that has an effect of further increasing strength by generating a hard phase. Further, Mo contributes to further strengthening by forming carbides. However, when Mo content exceeds 0.50 %, the effect of the addition is saturated and the effect is not commensurate with the increase in alloy cost. Therefore, when Mo is added, the Mo content is 0.50 % or less. The Mo content is preferably 0.45 % or less. On the other hand, from the viewpoint of enhancing the effect of adding Mo, the Mo content is preferably 0.02 % or more. The Mo content is more preferably 0.05 % or more.

### Cu: 0.50 % or less

Cu is an element that has an effect of increasing hydrogen overvoltage and thus improving delayed fracture resistance after resistance welding. However, when Cu content exceeds 0.50 %, the effect of the addition becomes saturated and surface defects are more likely to occur. The Cu content is therefore 0.50 % or less. From the viewpoint of enhancing the effect of Cu addition, the Cu content is preferably 0.005 % or more.

### Ni: 0.50 % or less

Ni, like Cu, is an element that has an effect of increasing hydrogen overvoltage and improving delayed fracture resistance. Further, when added together with Cu, Ni has an effect of suppressing surface defects caused by Cu. However, when Ni content exceeds 0.50 %, the effect of the addition becomes saturated. Therefore, when Ni is added, the Ni content is 0.50 % or less. From the viewpoint of enhancing the effect of Ni addition, the Ni content is preferably 0.005 % or more.

### Ca: 0.0050 % or less

Ca is an element that has an effect of further improving hole expansion formability by spheroidizing the shape of sulfides. Further, Ca contributes to the improvement of delayed fracture resistance after resistance welding. However, when Ca content exceeds 0.0050 %, the effect is saturated, and therefore, when Ca is added, the Ca content is 0.0050 % or less. From the viewpoint of enhancing the effect of Ca addition, the Ca content is preferably 0.0005 % or more.

### REM: 0.0050 % or less

REM (rare earth metals), like Ca, are elements that have an effect of further improving hole expansion formability by spheroidizing the shape of sulfides. Further, REM also contribute to improved delayed fracture resistance after resistance welding. However, when REM content exceeds 0.0050 %, the effect is saturated, and therefore, when a REM is added, the REM content is 0.0050 % or less. From the viewpoint of enhancing the effect of REM addition, the REM content is preferably 0.0005 % or more.

### Value of A: 0.9 to 6.0

The chemical composition of the steel sheet according to the present disclosure further has a value of A from 0.9 to 6.0, as defined by the following Expression (1). $A = \left(\left[C\right]+\left[Si\right]/8+\left[Mn\right]/20\right) / \left(2\times \left(\left[Ti\right]+\left[Nb\right]\right)+85\times \left(\left[B\right]+\left[Sb\right]/20\right)\right.$

The square brackets in Expression (1) represent content in mass% of an element enclosed in the square brackets and have a value of 0 when the element is not contained.

When the value of A is less than 0.9, the desired hole expansion formability cannot be obtained. This is because the additions of Ti, Nb, B, and Sb are excessive relative to the equivalent carbon content. When too much Ti and Nb are added, Ti precipitates and Nb precipitates become excessive, resulting in decreased hole expansion formability. Further, when too much B and Sb are added, excessive segregation of B and Sb at crystal grain boundaries results in decreased hole expansion formability. The value of A is therefore 0.9 or more. The value of A is preferably 1.0 or more. On the other hand, when the value of A is greater than 6.0, weldability, in particular cross tensile strength, is decreased. This is because the additions of Ti, Nb, B, and Sb are insufficient relative to the equivalent carbon content. The value of A is therefore 6.0 or less. The value of A is preferably 5.8 or less. The value of A is more preferably 5.0 or less.

### [Microstructure]

The steel sheet according to the present disclosure needs to satisfy specific conditions for microstructure at a 1/4 sheet thickness position and microstructure in a range from a surface of the steel sheet to a depth of 7 µm. The reasons for this are described below.

### (Microstructure at 1/4 sheet thickness position)

### M: 93 % or more

When the volume fraction of martensite (M) is less than 93 %, the desired tensile strength and hole expansion formability cannot be obtained. When the total volume fraction is less than 93 %, delayed fracture resistance is also decreased. The volume fraction of martensite (M) at the 1/4 sheet thickness position is therefore 93 % or more. The volume fraction of M is preferably 95 % or more. An upper limit of the volume fraction is not particularly limited, and may be 100 %.

Hereinafter, tempered martensite is also defined to be included in the term "martensite". This is because it is difficult to distinguish between martensite and tempered martensite in the microstructure of the steel sheet according to the present disclosure. Further, the "tempered martensite" includes martensite that is generated by self-tempering during cooling in annealing from the martensite start temperature (Ms temperature) to room temperature, as well as martensite that is generated by further tempering thereafter.

### Average grain size of M: 7 µm or less

When the average grain size of martensite is larger than 7 µm, voids that form at interfaces between martensite and ferrite are more likely to consolidate, and therefore hole expansion formability degrades. Further, coarsening of crystal grains after resistance welding results in a decrease in cross tensile strength. The average grain size of martensite at the 1/4 sheet thickness position is therefore 7 µm or less. The average grain size is preferably 6 µm or less. On the other hand, a lower limit of the average grain size of martensite is not particularly limited, and may be 2 µm or more, for example.

### F: 0 % to 5 %

When the volume fraction of ferrite (F) exceeds 5 %, void formation during punching increases, and therefore hole expansion formability decreases. Further, a higher ferrite fraction requires a higher hardness of martensite in order to secure the desired strength. The volume fraction of ferrite at the 1/4 sheet thickness position is therefore 5 % or less. The volume fraction is preferably 3 % or less. The volume fraction is more preferably 1 % or less. In view of the above, the lower the volume fraction of ferrite, the better, and therefore a lower limit is 0 %.

### Average grain size of F: 3 µm or less

When the average grain size of ferrite is larger than 3 µm, voids generated at a punched end surface during hole expansion are more likely to consolidate during hole expansion, and therefore the desired hole expansion formability cannot be achieved. The average grain size of ferrite at the 1/4 sheet thickness position is therefore 3 µm or less. The average grain size is preferably 2.5 µm or less. On the other hand, a lower limit of the average grain size of ferrite is not particularly limited and may be, for example, 1 µm or more, or 2 µm or more.

### RA: 0 % to 7 %

When the volume fraction of retained austenite (RA) exceeds 7 %, void formation increases due to martensite formation during punching, resulting in decreased hole expansion formability. The volume fraction of retained austenite at the 1/4 sheet thickness position is therefore 7 % or less. The volume fraction is preferably 5 % or less. In view of the above, the lower the volume fraction of retained austenite, the better, and therefore a lower limit is 0 %.

### Average grain size of RA: 3 µm or less

When the average grain size of retained austenite exceeds 3 µm, hole expansion formability is decreased. This is due to the effect of C distribution in retained austenite, which results in martensite formation during punching, thus increasing void formation. The average grain size of retained austenite is therefore 3 µm or less. The average grain size is preferably 2.5 µm or less. On the other hand, a lower limit is not particularly specified, but elongation is further improved when the average grain size is 0.3 µm or larger. The average grain size of retained austenite is therefore preferably 0.3 µm or more. The average grain size is more preferably 0.5 µm or more. The average grain size is even more preferably 1 µm or more.

The microstructure at the 1/4 sheet thickness position may optionally contain other microstructure in addition to the microstructure described above. However, the volume fraction of the other microstructure is 7 % or less. The other microstructure may be, for example, at least one selected from the group consisting of bainite, cementite, and pearlite.

### (Microstructure in range from surface to depth of 7 µm)

According to the present disclosure, controlling microstructure in a range from a surface of the steel sheet to a depth of 7 µm is important. The reasons for this are described below.

As an index of the hole expansion formability of a steel sheet, a hole expansion ratio, as measured by a hole expanding test, is typically used. In the hole expanding test, as the steel sheet is punched through by a punch, the punch movement is stopped at the moment a crack penetrates the test piece in the thickness direction, and the diameter of the hole at this time is measured. The crack propagates by the gradual consolidation of voids generated centrally along the sheet thickness and eventually penetrates to the surface layer of the steel sheet. The inventors found that decreasing a hard phase (martensite) in the steel sheet surface layer inhibits cracks from eventually propagating to the surface layer. Further, the inventors also found that this surface layer microstructure that has less hard phase preferentially deforms when pressurized by electrodes during spot welding, thus suppressing spattering generated at high current densities. Further, by providing the surface layer microstructure that has less hard phase, the strength of the corona bonded portion after spot welding is also improved.

### • M: 0 % to 20 %

As mentioned above, decreasing the hard phase in the surface layer of the steel sheet is important to improve formability and weldability. Specifically, when the volume fraction of martensite in the range from a surface to a depth of 7 µm is higher than 20 %, hole expansion formability is decreased, the appropriate current range for welding becomes narrower, and cross tensile strength is also decreased. Therefore, the volume fraction is 20 % or less. The volume fraction is preferably 15 % or less. On the other hand, a lower limit of the volume fraction is 0 %.

The microstructure in the range from the surface to the depth of 7 µm suffices when the volume fraction of martensite meets the above conditions, and other microstructure is not particularly limited. However, when the steel sheet is produced by the production process described below, the microstructure in the range from the surface to the depth of 7 µm is typically mainly ferrite microstructure as a result of decarburization in the annealing process. Therefore, the microstructure in the range from the surface to the depth of 7 µm may be mainly ferrite. More specifically, the volume fraction of ferrite is preferably 50 % or more. The volume fraction is more preferably 60 % or more. The volume fraction is even more preferably 70 % or more.

The microstructure in the range from the surface to the depth of 7 µm may additionally contain a volume fraction of 0 % to 15 % retained austenite. The microstructure may optionally contain other microstructure other than martensite, ferrite, and retained austenite. However, the volume fraction of the other microstructure is preferably 7 % or less. The other microstructure may be, for example, at least one selected from the group consisting of bainite, cementite, and pearlite.

### [Precipitates]

The inventors found that dispersing Ti or Nb fine precipitates in the steel sheet microstructure refines grain size at nugget edges even after spot welding, and therefore improves toughness. Therefore, the inventors found that cross tensile strength can be improved extremely effectively by combining the control of microstructure of the steel sheet surface layer described above with control of number density of fine precipitates. Therefore, specifically, the number density of precipitates is controlled as follows.

### Number density of precipitates: 20/100 µm² or more

When the number density of Ti precipitates that have a particle size of 0.005 µm or more to less than 0.10 µm and Nb precipitates that have a particle size of 0.005 µm or more to less than 0.10 µm in a depth range from 50 µm to 100 µm from a surface of the steel sheet is less than 20/100 µm², refinement of grain size at nugget edges is insufficient, and cross tensile strength is decreased. In addition, function as a hydrogen trapping site after resistance spot welding also becomes insufficient, resulting in a decrease in delayed fracture resistance. Accordingly, the number density is 20/100 µm² or more. On the other hand, an upper limit of the number density is not particularly limited. In order to secure formability, the number density is preferably 250/100 µm² or less. The number density is more preferably 100/100 µm² or less. The number density is even more preferably 40/100 µm² or less. The number density is most preferably 30/100 µm² or less.

### [Zinc or zinc alloy coated or plated layer]

The steel sheet according to the present disclosure may be a cold-rolled steel sheet without a coated or plated layer on any surface, but preferably includes a zinc or zinc alloy coated or plated layer on at least one surface.

As the zinc or zinc alloy coated or plated layer, either a zinc coated or plated layer or a zinc alloy coated or plated layer may be used. In other words, the steel sheet according to the present disclosure may be a galvanized steel sheet, and may be a galvannealed steel sheet. The zinc alloy coated or plated layer is not particularly limited and a coated or plated layer made of any zinc alloy may be used. As the zinc alloy coated or plated layer, it is preferable to use a zinc alloy coated or plated layer that has a composition selected from the group consisting of Zn-Al, Zn-Al-Mg, Zn-Al-Si, Zn-Al-Mg-Si, and Zn-Al-Mg-Ni.

The zinc or zinc alloy coated or plated layer may be formed by any method. For example, the zinc or zinc alloy coated or plated layer may be a hot-dip galvanized layer, a hot-dip galvannealed layer, or an electroplated zinc or zinc alloy layer. In other words, the steel sheet according to the present disclosure may be a hot-dip galvanized steel sheet, a hot-dip galvannealed steel sheet, or a zinc or zinc alloy electroplated steel sheet.

Coating weight of the zinc or zinc alloy coated or plated layer is not particularly limited. From the viewpoint of corrosion resistance and ease of controlling the coating weight, the coating weight is preferably 25 g/m² or more per side of the steel sheet. On the other hand, from the viewpoint of adhesion of the coated or plated layer, the coating weight is preferably 80 g/m² or less per side of the steel sheet.

### [Pre-coating]

When the steel sheet has a zinc or zinc alloy coated or plated layer, the steel sheet may further have a pre-coating layer between the steel sheet (base steel sheet) and the zinc or zinc alloy coated or plated layer.

As the pre-coating layer, a coated or plated layer of any composition may be used without any particular limitation. The pre-coating layer is preferably an Fe-based coated or plated layer. The pre-coating layer is more preferably an Fe-based electroplated layer.

The Fe-based coated or plated layer may be, for example, an Fe coated or plated layer or an Fe alloy coated or plated layer. Here, an Fe coated or plated layer is a coated or plated layer consisting of Fe and inevitable impurity, also called a "pure Fe coated or plated layer". On the other hand, as the Fe alloy coated or plated layer, a coated or plated layer made of any Fe alloy may be used without any particular limitation. The Fe alloy coated or plated layer may, for example, be a coated or plated layer made of one or more alloys selected from the group consisting of Fe-B alloy, Fe-C alloy, Fe-P alloy, Fe-N alloy, Fe-O alloy, Fe-Ni alloy, Fe-Mn alloy, Fe-Mo alloy, and Fe-W alloy.

The Fe-based electroplated layer according to an embodiment of the present disclosure preferably has a chemical composition containing at least one selected from the group consisting of B, C, P, N, O, Ni, Mn, Mo, Zn, W, Pb, Sn, Cr, V, and Co, to a total of 10 % or less, with the balance consisting of Fe and inevitable impurity. Setting the total amount of elements other than Fe to 10 % or less can prevent a decrease in electrolytic efficiency, making it possible to form an Fe-based electroplated layer at low cost.

The Fe-based coated or plated layer functions as a soft layer, and therefore the Fe-based coated or plated layer can relieve stress imparted to the steel sheet surface during welding. In addition to decreasing residual stress in a resistance welded portion, the presence of an Fe-based coated or plated layer allows diffusible hydrogen to efficiently escape from the steel sheet surface, and therefore improves delayed fracture resistance.

Coating weight of the Fe-based coated or plated layer is not particularly limited. From the viewpoint of enhancing the above effect, the coating weight is preferably 0.5 g/m² or more per side of the steel sheet. The coating weight is more preferably 1.0 g/m² or more per side of the steel sheet. On the other hand, from a cost perspective, the coating weight of the Fe-based coated or plated layer is preferably 60 g/m² or less per side. The coating weight is more preferably 50 g/m² or less per side. The coating weight is even more preferably 40 g/m² or less per side. The coating weight is most preferably 30 g/m² or less per side.

The coating weight of the Fe-based coated or plated layer is measured as follows. A sample of 10 mm × 15 mm in size is taken from the steel sheet after the zinc or zinc alloy coated or plated layer is formed and embedded in resin to obtain a cross-sectional embedded sample. The thickness of the Fe-based coated or plated layer is determined by observing any three locations on the same cross-section using a scanning electron microscope (SEM). The accelerating voltage in the SEM observation may be 15 kV. Further, the magnification during the SEM observation may be 2000× to 10,000×, depending on the thickness of the Fe-based coated or plated layer. The average value of the thicknesses measured at the three locations is multiplied by the specific gravity of iron to convert to the coating weight per side of the Fe-based coated or plated layer.

### [Spot welding method]

In the spot welding method according to an embodiment of the present disclosure, a sheet combination including at least one sheet of the steel sheet described above is squeezed between a pair of welding electrodes and joined by passing a current while applying electrode force. The conditions under which spot welding is carried out are not particularly limited, and typical welding conditions can be employed.

For example, two steel sheets are overlapped to form a sheet combination. Next, a pair of welding electrodes squeezes the sheet combination from above and below, and current is passed under defined welding conditions while applying electrode force. This allows the steel sheets comprising the sheet combination to be joined together to form a resistance spot welded member. When a cold-rolled steel sheet and a galvanized steel sheet are overlapped to make a sheet combination, the steel sheets may be overlapped so that the side that has the zinc or zinc alloy coated layer of the galvanized steel sheet may face the cold-rolled steel sheet.

The resistance spot welding method according to an embodiment of the present disclosure may include a main current passage process in which the pair of welding electrodes are used to squeeze the sheet combination and pass current while applying pressure to form a nugget.

The current passage conditions and pressure conditions for forming nuggets in the main current passage process are not particularly limited. From the viewpoint of application to structural parts of automobiles and the like, the current passage conditions and pressure conditions are preferably adjusted to the following ranges.

For example, a current value of the main current passage process, in order to obtain a stable nugget diameter, can preferably be from 3.0 kA to 15.0 kA. The nugget diameter employed for a spot welded portion in an automotive steel sheet is typically from 3.0√t to 6.0√t (where t is the thinnest sheet thickness in the sheet combination), and when the current value is too small, the target nugget diameter cannot be stably obtained. On the other hand, when the current value of the main current passage process is increased outside of the above range, the nugget diameter may become too large, or the degree of melting of the steel sheet may increase, and a molten welded portion may be expelled (splashed) out of the sheet, resulting in a smaller nugget diameter.

The current passage time of the main current passage process is preferably from 0.18 s to 1.0 s. This, as with the current value for the main current passage process, is the time required to obtain the target nugget diameter. When the current passage time of the main current passage process is less than 0.18 s, a nugget is less likely to form. On the other hand, when the current passage time of the main current passage process exceeds 1.0 s, the nugget diameter may become larger, and there is a concern that construction workability may deteriorate. However, as long as the required nugget diameter is obtained, the current passage time tW of the main current passage process may be shorter or longer than the above preferred range.

The pressure condition for the main current passage process is preferably an electrode force from 2.0 kN to 7.0 kN. When the electrode force F in the main current passage process is too large, the current passage area expands, which tends to make securing the nugget diameter difficult. On the other hand, when the electrode force F in the main current passage process is too small, the current passage area becomes smaller and expulsion is more likely to occur. Accordingly, the electrode force F in the main current passage process is preferably in the above preferred range. The electrode force may be limited by apparatus capacity. However, as long as the required nugget diameter is obtained, the electrode force F in the main current passage process may be lower or higher than the above preferred range.

In the resistance spot welding method according to an embodiment of the present disclosure, subsequent-current may be applied after the main current passage process described above. The subsequent-current may be applied under any conditions without particular limitations, but the current value for the subsequent-current is preferably higher than the current value in the main current passage process. Specifically, at least 1.1 times the current value in the main current passage process is preferred. Further, the welding time of the subsequent-current is preferably 1.0 s or less. The subsequent-current may be carried out in multiple stages, in which case the total current passage time in the subsequent-current is preferably 1.0 s or less.

Further, a tempering process may be carried out after the main current passage process to temper an area around the nugget. The conditions of the tempering process are not particularly limited. A current value in the tempering process is preferably lower than the current value in the main current passage process, specifically, preferably at most 0.9 times the current value in the main current passage process. Further, the current passage time in the tempering process is preferably 2.0 s or less.

### [Resistance spot welded member]

The resistance spot welded member according to an embodiment of the present disclosure is a resistance spot welded member that includes at least one sheet of the steel sheet in a sheet combination. The resistance spot welded member may be produced by a typical resistance spot welding method, as described above.

### [Method of producing steel sheet]

The following describes the method of producing a steel sheet according to the present disclosure. As mentioned above, the steel sheet according to the present disclosure may be a cold-rolled steel sheet without a coated or plated layer on a surface, and may be a zinc or zinc alloy coated or plated steel sheet that has a zinc or zinc alloy coated or plated layer on a surface. Further, the zinc or zinc alloy coated or plated steel sheet may be an electroplated steel sheet, a hot-dip galvanized steel sheet, or a hot-dip galvannealed steel sheet. Therefore, the following is a description of preferred production methods for each case.

### • First embodiment

In the first embodiment according to the present disclosure, a steel sheet that satisfies the conditions mentioned above can be produced by sequentially carrying out the following processes using molten steel that has the chemical composition mentioned above as the starting material. When no coating or plating is applied after annealing, a steel sheet without a coated or plated layer on any surface (cold-rolled steel sheet) is obtainable.
(1) Continuous casting
(2) Cooling
(3) Reheating
(4) Hot rolling
(5) Cooling
(6) Coiling
(7) Cold rolling
(8) Annealing

### (1) Continuous casting

First, molten steel having the chemical composition described above is continuously cast to obtain a steel slab. Continuous casting has higher production efficiency than mold casting. The continuous casting may be carried out using any continuous casting machine, but a vertical-bending-type continuous casting machine is preferably used. The vertical-bending-type continuous casting machine offers an excellent balance between apparatus cost and surface quality of the obtained steel slab. Further, the vertical-bending-type continuous casting machine also has an effect of excellent surface crack suppression.

### (2) Cooling

Next, the steel slab obtained by the continuous casting is cooled. In the cooling, when an average cooling rate in a temperature range to 600 °C is less than 100 °C/h, weldability is decreased. This is because, in addition to contributing to Mn segregation, coarse Ti precipitates and Nb precipitates remain after final annealing. Accordingly, the steel slab is cooled under the condition that the average cooling rate in the temperature range to 600 °C is 100 °C/h or more. On the other hand, an upper limit of the average cooling rate is not particularly limited. The average cooling rate is preferably 150 °C/h or less. The average cooling rate is more preferably 130 °C/h or less.

According to the present disclosure, the average cooling rate in the temperature range to 600 °C is controlled as described above, and a cooling stop temperature is not particularly limited. In other words, cooling is possible to any temperature that is 600 °C or less. For example, the steel slab may be cooled to room temperature and then reheated and hot rolled, or the cooling may be stopped at a temperature higher than room temperature as a warm slab that is then reheated and hot rolled.

### (3) Reheating

Next, the steel slab after the cooling is reheated. By reheating, precipitates such as Ti precipitates and Nb precipitates in the steel can be redissolved.

### • Heating temperature: 1250 °C to 1450 °C

When the heating temperature in the reheating is less than 1250 °C, the precipitates cannot be sufficiently redissolved and coarse precipitates remain after final annealing. As a result, the number density of fine Ti precipitates and Nb precipitates cannot be achieved in the desired range, resulting in poor weldability. The heating temperature is therefore 1250 °C or more. The heating temperature is preferably 1270 °C or more. On the other hand, when the heating temperature is higher than 1450 °C, crystal grains coarsen. As a result, the desired crystal grain size cannot be obtained after final annealing, resulting in decreased hole expansion formability and resistance weldability. The heating temperature is therefore 1450 °C or less. The heating temperature is preferably 1410 °C or less.

### • Hold time: 60 min or more

When the hold time in the reheating is less than 60 min, precipitates cannot be sufficiently redissolved and coarse precipitates remain after final annealing. As a result, the number density of fine Ti precipitates and Nb precipitates cannot be achieved in the desired range, resulting in poor weldability. The hold time is therefore 60 min or more. On the other hand, an upper limit of the hold time is not particularly limited. From the viewpoint of productivity, the hold time is preferably 180 min or less. The hold time is more preferably 150 min or less.

### (4) Hot rolling

The steel slab after the reheating is then hot rolled to obtain a hot-rolled steel sheet. In the hot rolling, microstructure in the steel sheet is homogenized and material property anisotropy is decreased, thereby improving elongation and hole expansion formability after annealing.

### • Rolling finish temperature: 850 °C to 950 °C

To achieve the above effect, hot rolling needs to be completed in the austenite single phase region. The rolling finish temperature is therefore 850 °C or more. On the other hand, when the rolling finish temperature is higher than 950 °C, the microstructure of the hot-rolled steel sheet becomes coarse and properties after annealing degrade. The rolling finish temperature is therefore 950 °C or less.

### (5) Cooling

The hot-rolled steel sheet is then cooled. The steel sheet microstructure of the hot-rolled steel sheet is controlled by rapidly cooling to a temperature range where bainite transformation occurs without ferrite transformation. This homogenized control of the hot-rolled microstructure has an effect of refinement of the final steel sheet microstructure, mainly ferrite and martensite.

### • Average cooling rate: 80 °C/s or more

To achieve the above effect, the average cooling rate is 80 °C/s or more. When the average cooling rate is less than 80 °C/s, ferrite transformation is initiated, resulting in non-uniformity of the steel sheet microstructure of the hot-rolled steel sheet, which decreases hole expansion formability and resistance weldability after annealing. On the other hand, an upper limit of the average cooling rate is not particularly limited. The average cooling rate is preferably 200 °C/s or less. The average cooling rate is more preferably 150 °C/s or less. The average cooling rate is even more preferably 120 °C/s or less.

### • Cooling stop temperature: 480 °C or less

Similarly, to achieve the above effect, the cooling stop temperature is 480 °C or less. The cooling stop temperature is preferably 450 °C or less. When the cooling stop temperature is higher than 480 °C, excess pearlite is formed, resulting in non-uniformity of the steel sheet microstructure of the hot-rolled steel sheet, which decreases hole expansion formability and resistance weldability after annealing. On the other hand, a lower limit of the cooling stop temperature is not particularly limited. The cooling stop temperature is preferably 250 °C or more.

### (6) Coiling

### • Coiling temperature: 480 °C or less

The hot-rolled steel sheet after cooling is then coiled at a coiling temperature of 480 °C or less. When the coiling temperature is higher than 480 °C, Ti precipitates and Nb precipitates coarsen, resulting in decreased resistance weldability. The coiling temperature is therefore 480 °C or less. The coiling temperature is preferably 450 °C or less. A lower limit of the coiling temperature is not particularly limited, but when the coiling temperature is too low, excessive hard martensite is formed and a cold rolling load increases. The coiling temperature is therefore preferably 250 °C or more. The coiling temperature is more preferably 300 °C or more. The coiling temperature is even more preferably 350 °C or more.

### (7) Cold rolling

After the coiling, the hot-rolled steel sheet is cold rolled to obtain a cold-rolled steel sheet. The conditions for cold rolling are not particularly limited and cold rolling may be carried out in accordance with a conventional method.

Further, pickling is preferably carried out prior to the cold rolling. Pickling may be used to remove scale from the surface layer of the hot-rolled sheet. The conditions for the pickling are not particularly limited and may be carried out in accordance with a conventional method.

### (8) Annealing

The cold-rolled steel sheet is then annealed. The annealing promotes recrystallization and forms the microstructure necessary to obtain the desired hardness (martensite).

### • Dew point: above -20 °C

In the annealing, C concentration in the steel sheet surface layer decreases due to the reaction of C in the steel sheet surface layer with moisture in the atmosphere. This can decrease the volume fraction of martensite at the steel sheet surface. However, when the dew point is less than -20 °C, the microstructure of the steel sheet surface layer is not as desired, resulting in a decrease in resistance weldability. The dew point of the annealing atmosphere is therefore above -20 °C. The dew point is preferably -15 °C or more. The dew point is more preferably -10 °C or more. An upper limit of the dew point of the annealing atmosphere is not particularly limited. From the viewpoint of improving adhesion when adding a zinc or zinc alloy coated or plated layer to the steel sheet surface, the dew point is preferably 30 °C or less. The dew point is more preferably 10 °C or less. The dew point is even more preferably 5 °C or less.

In the annealing, the cold-rolled steel sheet is first heated to an annealing temperature of 780 °C to 980 °C at an average heating rate of 3 °C/s to 30 °C/s, and then held (soaked) at the annealing temperature for a hold time of 15 s to 360 s.

### • Average heating rate: 3 °C/s to 30 °C/s

By carrying out the annealing, crystal grains can be refined. However, when heated rapidly, recrystallization does not progress sufficiently and therefore the desired crystal grain size cannot be obtained. The average heating rate in the heating is therefore 30 °C/s or less. On the other hand, when the heating rate is too slow, Ti precipitates and Nb precipitates coarsen, resulting in decreased resistance weldability. The average heating rate is therefore 3 °C/s or more. The average heating rate is preferably 5 °C/s or more.

### • Annealing temperature: 760 °C to 980 °C

The annealing needs to be carried out in the two-phase region of ferrite and austenite or in the austenite single phase region. When the annealing temperature is less than 760 °C, the ferrite fraction increases, and therefore desired values for strength, hole expansion formability, and resistance weldability cannot all be achieved. The annealing temperature is therefore 760 °C or more. The annealing temperature is more preferably 820 °C or more. The annealing temperature is even more preferably 850 °C or more. On the other hand, when the annealing temperature is too high, the growth of austenite crystal grains becomes more pronounced and crystal grain coarsening results in decreased resistance weldability. The annealing temperature is therefore 980 °C or less. The annealing temperature is preferably 950 °C or less.

### • Hold time: 15 s to 360 s

By holding at the annealing temperature, recrystallization is promoted and austenite transformation is caused in part or all of the microstructure. When the hold time is less than 15 s, the desired microstructure cannot be obtained. The hold time is therefore 15 s or longer. On the other hand, when the hold time is longer than 360 s, Ti precipitates or Nb precipitates coarsen, resulting in decreased resistance weldability. The hold time is therefore 360 s or less. The hold time is preferably 300 s or less.

After holding at the annealing temperature, the steel sheet is cooled to room temperature at an average cooling rate of 3 °C/s or more.

### • Average cooling rate: 3 °C/s or more

When the average cooling rate in the cooling is less than 3 °C/s, the desired volume fraction of martensite is not obtained, resulting in decreased strength and hole expansion formability. The average cooling rate is therefore 3 °C/s or more. On the other hand, an upper limit of the average cooling rate is not particularly limited. The average cooling rate is preferably less than 100 °C/s. The average cooling rate is preferably 50 °C/s or less. The average cooling rate is more preferably 20 °C/s or less.

Further, after the annealing, temper rolling may be carried out. The temper rolling may be carried out under any conditions, but an elongation rate of 0.05 % to 2.0 % is preferable.

### • Second embodiment

According to the second embodiment of the present disclosure, electroplating may be applied to the steel sheet after the annealing to form a zinc or zinc alloy plated layer on at least one surface of the steel sheet. An electroplated steel sheet is obtainable by this method.

### (Electroplating)

The electroplating can be carried out under any conditions without any particular limitations. That is, according to the present disclosure, the desired properties are achieved by controlling the microstructure and precipitates of the base steel sheet, and therefore plating treatment conditions are not limited and may be carried out according to a conventional method.

### • Third embodiment

In the third embodiment according to the present disclosure, a steel sheet that satisfies the conditions mentioned above can be produced by sequentially carrying out the following processes using molten steel that has the chemical composition mentioned above as the starting material. According to this method, a hot-dip galvanized steel sheet that has a hot-dip galvanized layer on a surface may be obtained.
(1) Continuous casting
(2) Cooling
(3) Reheating
(4) Hot rolling
(5) Cooling
(6) Coiling
(7) Cold rolling
(8) Annealing
(9) Hot-dip coating
(10) Cooling

According to the present embodiment, each of the above processes (1) to (7) can be carried out under the same conditions as for the first embodiment. Therefore, the processes (8) to (10) are described below.

### (8) Annealing

According to the present embodiment, the cold-rolled steel sheet obtained in the cold rolling process is annealed prior to hot-dip coating.

### • Dew point: above -20 °C

In the annealing, C concentration in the steel sheet surface layer decreases due to the reaction of C in the steel sheet surface layer with moisture in the atmosphere. This can decrease the volume fraction of martensite at the steel sheet surface. However, when the dew point is less than -20 °C, the microstructure of the steel sheet surface layer is not as desired, resulting in a decrease in resistance weldability. The dew point of the annealing atmosphere is therefore above -20 °C. The dew point is preferably -15 °C or more. The dew point is more preferably -10 °C or more. An upper limit of the dew point of the annealing atmosphere is not particularly limited. From the viewpoint of improving adhesion when adding a zinc or zinc alloy coated or plated layer to the steel sheet surface, the dew point is preferably 30 °C or less. The dew point is more preferably 10 °C or less. The dew point is even more preferably 5 °C or less.

In the annealing, the cold-rolled steel sheet is first heated to an annealing temperature of 780 °C to 980 °C at an average heating rate of 3 °C/s to 30 °C/s, and then held (soaked) at the annealing temperature for a hold time of 15 s to 360 s.

### • Average heating rate: 3 °C/s to 30 °C/s

By carrying out the annealing, crystal grains can be refined. However, when heated rapidly, recrystallization does not progress sufficiently and therefore the desired crystal grain size cannot be obtained. The average heating rate in the heating is therefore 30 °C/s or less. On the other hand, when the heating rate is too slow, Ti precipitates and Nb precipitates coarsen, resulting in decreased resistance weldability. The average heating rate is therefore 3 °C/s or more. The average heating rate is preferably 5 °C/s or more.

### • Annealing temperature: 760 °C to 980 °C

The annealing needs to be carried out in the two-phase region of ferrite and austenite or in the austenite single phase region. When the annealing temperature is less than 760 °C, the ferrite fraction increases, and therefore desired values for strength, hole expansion formability, and resistance weldability cannot all be achieved. The annealing temperature is therefore 760 °C or more. The annealing temperature is more preferably 820 °C or more. The annealing temperature is even more preferably 850 °C or more. On the other hand, when the annealing temperature is too high, the growth of austenite crystal grains becomes more pronounced and crystal grain coarsening results in decreased resistance weldability. The annealing temperature is therefore 980 °C or less. The annealing temperature is preferably 950 °C or less.

### • Hold time: 15 s to 360 s

By holding at the annealing temperature, recrystallization is promoted and austenite transformation is caused in part or all of the microstructure. When the hold time is less than 15 s, the desired microstructure cannot be obtained. The hold time is therefore 15 s or longer. On the other hand, when the hold time is longer than 360 s, Ti precipitates or Nb precipitates coarsen, resulting in decreased resistance weldability. The hold time is therefore 360 s or less. The hold time is preferably 300 s or less.

### • Average cooling rate: 3 °C/s or more

After the holding, the steel sheet is cooled from the annealing temperature up to entry into a hot-dip coating bath at an average cooling rate of 3 °C/s or more. When the average cooling rate in the cooling is less than 3 °C/s, the desired volume fraction of martensite is not obtained, resulting in decreased strength and hole expansion formability. The average cooling rate is therefore 3 °C/s or more. On the other hand, an upper limit of the average cooling rate is not particularly limited. The average cooling rate is preferably less than 100 °C/s. The average cooling rate is preferably 50 °C/s or less. The average cooling rate is more preferably 20 °C/s or less.

### (9) Hot-dip coating

According to the present embodiment, hot-dip coating is applied to the steel sheet after annealing to form a hot-dip galvanized layer on at least one surface of the steel sheet. A hot-dip galvanized steel sheet is obtainable by this method.

The hot-dip coating may be carried out by any method. That is, according to the present disclosure, the desired properties are achieved by controlling the microstructure and precipitates of the base steel sheet, and therefore coating treatment conditions are not particularly limited and may be carried out according to a conventional method.

Although any hot-dip coating bath can be used for the hot-dip coating without any particular limitation, it is preferable to use a hot-dip coating bath having a composition consisting of Al, Zn, and inevitable impurity. The Al concentration in the molten bath is not particularly limited but may be from 0.05 % to 0.25 %, for example. When the Al concentration is 0.05 % or more, the generation of bottom dross is suppressed, and therefore dross can be prevented from adhering to the steel sheet and causing a defect. On the other hand, when the Al concentration is 0.25 % or less, an increase in top dross is suppressed, and therefore dross can be prevented from adhering to the steel sheet and causing a defect. Further, material costs can be decreased by lowering the Al concentration.

Other conditions for the hot-dip coating are not particularly limited. For example, the temperature of the hot-dip coating bath is preferably 440 °C to 500 °C, which is a typical bath temperature for hot-dip coating. Further, the temperature of the steel sheet when entering the hot-dip coating bath (entry sheet temperature) is preferably 440 °C to 550 °C.

Further, the coating weight may be adjusted after the hot-dip coating treatment. The method of adjusting the coating weight is not particularly limited, and typically the coating weight is adjusted by gas wiping. The coating weight is adjusted by adjusting the conditions of gas wiping, for example, gas pressure, distance between the wiping nozzle and the steel sheet, and the like.

### (10) Cooling

The steel sheet after the hot-dip coating is then cooled to room temperature at an average cooling rate of 3 °C/s or more. When the average cooling rate in the cooling is less than 3 °C/s, the desired volume fraction of martensite is not obtained, resulting in decreased strength and hole expansion formability. The average cooling rate is therefore 3 °C/s or more. On the other hand, an upper limit of the average cooling rate is not particularly limited. The average cooling rate is preferably less than 100 °C/s. The average cooling rate is preferably 50 °C/s or less. The average cooling rate is more preferably 20 °C/s or less.

Thus, according to the present embodiment, it is important that the average cooling rate in both the cooling in the annealing process and the cooling after the hot-dip coating be 3 °C/s or more, in order to obtain the desired microstructure.

### • Fourth embodiment

According to the fourth embodiment of the present disclosure, after the hot-dip coating, alloying treatment is applied prior to the cooling to room temperature. The hot-dip galvanized layer can be alloyed by the alloying treatment to obtain a galvannealed steel sheet.

### (Alloying treatment)

The alloying treatment may be carried out under any conditions without any particular limitations. That is, according to the present disclosure, the desired properties are achieved by controlling the microstructure and precipitates of the base steel sheet, and therefore alloying treatment conditions are not limited and may be carried out according to a conventional method.

The alloying treatment is preferably carried out at a temperature of 450 °C or higher. The alloying treatment is preferably carried out at a temperature of 600 °C or lower. By carrying out the alloying treatment at a temperature of 450 °C or higher, it is possible to provide the steel sheet that has excellent press formability without residual η-phase in the coated layer. Further, by carrying out the alloying treatment at a temperature of 600 °C or lower, good coating adhesion is obtainable. The alloying time is preferably 5 s or more. The alloying time is preferably 60 s or less.

### (Pre-coating)

Further, in another embodiment of the present disclosure, prior to coating or plating to form a zinc or zinc alloy coated or plated layer, a coated or plated layer may be formed on a steel sheet surface by further carrying out optional pre-coating.

The timing of the pre-coating is not particularly limited as long as the pre-coating is prior to the coating or plating to form a zinc or zinc alloy coated or plated layer. Typically, when forming a zinc or zinc alloy plated layer by electroplating, the pre-coating is preferably carried out after the annealing, prior to the electroplating. That is, the annealing, the pre-coating, and the electroplating may be applied to the cold-rolled steel sheet in this order. On the other hand, when forming a zinc or zinc alloy coated layer by hot-dip coating, the pre-coating is preferably carried out after the cold rolling, prior to the annealing. That is, the cold rolling, the pre-coating, the annealing, and the hot-dip galvanizing may be carried out in this order. When an alloying treatment is to be carried out, the alloying treatment may be carried out after the hot-dip galvanizing as usual.

In the pre-coating, any coated or plated layer may be formed. An Fe-based coated or plated layer is preferably formed. The formation of the Fe-based coated or plated layer is preferably carried out by electroplating. The following describes the case of forming the Fe-based coated or plated layer as the pre-coating by an Fe-based electroplating treatment.

The Fe-based electroplating treatment is not limited to a particular method. For example, any bath such as a sulfuric acid bath, a hydrochloric acid bath, or a sulfuric acid + hydrochloric acid bath may be applied as a Fe-based electroplating bath.

The Fe ion content as Fe²⁺ in the Fe-based electroplating bath before the start of current passage is preferably 1.0 mol/L or more. When the Fe ion content as Fe²⁺ in the Fe-based electroplating bath is 1.0 mol/L or more, a sufficient Fe coating weight is obtainable. Further, aside from Fe ions and alloying elements such as B, C, P, N, O, Ni, Mn, Mo, Zn, W, Pb, Sn, Cr, V, and Co, the Fe-based electroplating bath may contain conductivity aids such as sodium sulfate and potassium sulfate as additives or impurities. Metal elements may be contained as metal ions, while non-metal elements may be contained as part of, for example, boric acid, phosphoric acid, nitric acid, organic acid, or the like. Further, an iron sulfate plating solution may also contain conductivity aids such as sodium sulfate and potassium sulfate, chelating agents, and pH buffers.

The cold-rolled steel sheet may be subjected to Fe-based electroplating without oxidation treatment in a preheating furnace or the like.

Other conditions for the Fe-based electroplating bath are also not particularly limited. A bath temperature of 30 °C or higher is preferred, considering the ability to maintain a constant temperature. The pH of the Fe-based electroplating bath is also not particularly specified. Considering the electrical conductivity of the Fe-based electroplating bath, the pH is preferably 3.0 or less. The current density is also not particularly limited, but is normally from 10 A/dm² to 150 A/dm². The sheet passing speed may be from 5 mpm to 150 mpm. A sheet passing speed of less than 5 mpm results in poor productivity, while a sheet passing speed of 150 mpm or more makes it difficult to stably control the coating weight.

Prior to the Fe-based electroplating, degreasing treatment and water washing may be carried out to clean the surface of the cold-rolled steel sheet, and pickling treatment and water washing may also be carried out to activate the surface. The Fe-based electroplating is preferably carried out following these pretreatments. The methods of degreasing treatment and water washing are not particularly limited, and a conventional method may be used. Various acids such as sulfuric acid, hydrochloric acid, nitric acid, and mixtures of these acids may be used in the pickling treatment. Among these, sulfuric acid, hydrochloric acid, or a mixture of these are preferred. Acid concentration is not particularly limited. In consideration of the ability to remove oxide coating and prevention of surface roughness (surface defects) due to excessive pickling, the acid concentration is preferably approximately 1 mass% to 20 mass%. Further, the pickling solution may contain a defoamer, a pickling promoter, a pickling inhibitor, or the like.

### EXAMPLES

To confirm the effectiveness of the present disclosure, steel sheets were prepared and properties were evaluated according to the following procedure. The four types of steel sheet produced were cold rolled steel sheets (CR), electrogalvanized steel sheets (EG), hot-dip galvanized steel sheets (GI), and galvannealed steel sheets (GA).

First, molten steel having the chemical compositions listed in Table 1 was continuously cast to obtain steel slabs, which were then cooled at the average cooling rates listed in Table 2.

After the cooling, the steel slabs were reheated under the conditions listed in Table 2, and then hot rolled under the conditions listed in Table 2 to obtain hot-rolled steel sheets. The hot-rolled steel sheets were cooled to the coiling temperature (CT) and coiled into coils under the conditions listed in Table 2. The hot-rolled steel sheets were then pickled and cold rolled at 50 % rolling reduction to obtain cold-rolled steel sheets that had a thickness of 1.4 mm.

In the production of cold-rolled steel sheets (CR), the cold-rolled steel sheets were annealed under the conditions listed in Table 2 and cooled to room temperature at the average cooling rates listed in Table 2.

In the production of electrogalvanized steel sheets (EG), the cold-rolled steel sheets were first annealed under the conditions listed in Table 2 and cooled to room temperature at the average cooling rates listed in Table 2. Electroplating was then applied to form an electrogalvanized layer on the surface of each of the steel sheets. The electroplating was carried out using a sulfuric acid bath containing 1.5 mol/L of Zn²⁺. The temperature of the molten bath was 50 °C and the pH was 1.5.

In the production of hot-dip galvanized steel sheets (GI), the cold-rolled steel sheets were first annealed under the conditions listed in Table 2 and cooled until entry into the hot-dip bath at the average cooling rates listed in Table 2. Each steel sheet was then immersed in a hot-dip galvanizing bath to form a hot-dip galvanizing layer on the surface of the steel sheet. As the hot-dip galvanizing bath, a molten bath consisting of Al, Zn, and inevitable impurity was used, with an Al concentration in the bath of 0.14 %. The temperature of the hot dip galvanizing bath was 460 °C.

In the production of galvannealed steel sheets (GA), the cold-rolled steel sheets were first annealed under the conditions listed in Table 2, and then cooled until entry into the hot-dip coating bath at the average cooling rates listed in Table 2. The hot-dip galvanized layer was then alloyed by applying an alloying treatment. The hot-dip galvanizing molten bath was of the same composition as that used in the production of the hot-dip galvanized steel sheets (GI) described above, and the temperature of the molten bath was also the same. The alloying treatment was carried out at a temperature of 550 °C.

The microstructure and number density of precipitates in the resulting steel sheets were then measured using the following procedure. The results are listed in Table 3.

### (Microstructure at 1/4 sheet thickness position)

### • Ferrite, martensite

The volume fractions of ferrite and martensite in each steel sheet was measured by the following procedure. First, a sheet thickness cross-section of the steel sheet parallel to the rolling direction was polished and etched with 3 % nital to reveal the microstructure. The cross-section was then observed using a scanning electron microscope (SEM) at a magnification of 3000x to obtain an SEM image of the microstructure at a 1/4 sheet thickness position. The area fractions of ferrite and martensite in the SEM images were calculated by a point counting method (according to ASTM E562-83 (1988)), and each area fraction was used as a volume fraction.

The average grain sizes of ferrite and martensite were determined by image interpretation of SEM images obtained from the SEM observations. Specifically, the area of individual ferrite and martensite grains in the SEM images was first determined by image interpretation. The circle equivalent diameters of the grains were then calculated from the areas, and an average value was used as average grain size. Image-Pro from Media Cybernetics was used for the image interpretation.

### • Retained austenite

The volume fraction of retained austenite was determined by X-ray diffraction. Specifically, the steel sheet was first polished to 1/4 depth in the thickness direction, and the diffracted X-ray intensity at the 1/4 depth in the thickness direction was measured by an X-ray diffraction method. The measurements were carried out using an X-ray diffractometer RINT2200, produced by Rigaku Corporation at an accelerating voltage of 50 keV with Mo Kα radiation as the source. The integrated intensity of the X-ray diffraction lines of the {200}, {211}, and {220} planes of ferrite and the {200}, {220}, and {311} planes of austenite were measured, and the volume fraction of retained austenite was calculated from the integrated intensity results obtained. The calculations were made using the formulas described in "X-ray Diffraction Handbook" (2000, Rigaku Denki K.K.), p. 26, 62-64.

The average crystal grain size of the retained austenite grains was determined by polishing a cross-section to 1/4 sheet thickness, etching with 3 % nital, and observation with a transmission electron microscope (TEM), and then carrying out image interpretation on the TEM image. Specifically, first, a TEM image of the microstructure at the 1/4 sheet thickness position was obtained by observation using a TEM at a magnification of 15,000×. An area of individual retained austenite grains was determined by image interpretation applied to the obtained TEM image. The circle equivalent diameter of individual particles was then calculated from the area, and an average value was used as the average grain size of retained austenite. Image-Pro from Media Cybernetics was used for the image interpretation.

### (Microstructure in range from surface of steel sheet to depth of 7 µm)

The microstructure in the range from the surface to a depth of 7 µm of the steel sheet was observed by SEM, and the volume fraction of martensite was calculated. When the measurement subject was a steel sheet with a coated or plated layer (EG, GI, and GA), the intensity profile was measured from the surface of the steel sheet by glow discharge optical emission spectroscopy, and the point where the intensity profile of Fe exceeded that of Zn was defined as the steel sheet surface. The martensite volume fraction from the SEM image was calculated in the same way as the martensite volume fraction at the 1/4 sheet thickness position described above.

### (Number density of precipitates)

The number densities of Ti precipitates and Nb precipitates were determined by TEM-EDS (energy dispersive X-ray spectroscopy). Specifically, the L-section of a steel sheet was first observed by TEM at a magnification of 10,000×, and TEM images were obtained at 10 randomly selected locations from a depth range of 5 µm to 100 µm from the surface of the steel sheet. Next, EDS was used to identify the Ti precipitates and Nb precipitates in the TEM images. The TEM images were subject to image interpretation using Image-Pro to determine the area of individual Ti precipitates and Nb precipitates. The circle equivalent diameter of individual particles was calculated from the areas determined. The number of Ti precipitates and Nb precipitates that had a circle equivalent diameter of 0.005 µm or more to less than 0.10 µm were then counted and divided by the area of the observed range to determine the number density of precipitates. The number density of precipitates was calculated for the TEM images obtained from 10 observations using the same procedure, and an average value was used as the number density of Ti precipitates and Nb precipitates.

The strength, formability, and weldability of the resulting steel sheets were then evaluated using the following procedures. The results are listed in Table 3.

### (Strength)

From each steel sheet, a JIS No. 5 tensile test piece was taken so that the orthogonal direction to the rolling direction was the tensile direction. Tensile strength (TS) of the steel sheet was then measured by a tensile test using the test piece. The tensile tests were conducted in accordance with JIS Z 2241 (1998).

### (Formability)

Hole expansion ratio was measured as an index of the formability (hole expansion formability) of steel sheets. The measurements were conducted in accordance with the Japan Iron and Steel Federation Standard (JIS Z 2256 (2010)). Specifically, first, a 10 mm diameter hole was punched at 12.5 % clearance. The punched test piece was then set in a testing machine with the burrs facing the die, and the hole expansion ratio (λ) was measured by forming the punched test piece using a 60° conical punch. When λ (%) was 25 % or more, the steel sheet was considered to have good hole expansion formability.

### (Weldability)

Appropriate current range and cross tensile strength in resistance spot welding were evaluated as indicators of weldability.

### • Appropriate current range

The appropriate current range was evaluated using the following procedure. First, from each steel sheet, a 20 mm × 50 mm test piece was cut out. Resistance spot welding was then carried out on two test pieces of the same type as a single sheet combination. A servomotor pressure-type, single-phase AC (50 Hz) resistance welder was used for the resistance spot welding described above. The electrode tip was a DR-type electrode made of alumina-dispersed copper that had a tip curvature radius of R40 mm and a tip diameter of 6 mm. Welding conditions were electrode force: 4000 N, current passage time: 20 cycles (50 Hz), and hold time: 5 cycles (50 Hz).

The welding current was increased in 0.1 kA increments from 3.0 kA, and the maximum current value at which no spattering occurred was recorded. The nugget diameter was measured from cross-sectional observation of the welded portion of the test pieces after welding, and the difference between the minimum current at which the nugget diameter relative to the sheet thickness t (mm) was 4.0√t (mm) or greater and the maximum current value at which no spattering occurred was defined as the appropriate current range for welding. The appropriate current range was defined as "good" when 1.2 kA or more and "poor" when less than 1.2 kA.

### • Cross tensile strength

Cross tensile strength after resistance spot welding was measured based on a cross tensile test method (JIS Z 3137). For the measurements, from each steel sheet, a 50 mm × 150 mm cross tensile test piece was cut out, and resistance spot welding was carried out on a sheet combination consisting of two test pieces of the same type. Resistance spot welding was carried out using a servomotor pressure-type single-phase AC (50 Hz) resistance welder mounted on a welding gun to produce a tensile test piece that had a resistance welded portion. The pair of electrode tips used were DR-type electrodes of alumina-dispersed copper that had a tip curvature radius of R40 mm and a tip diameter of 6 mm. Welding conditions were electrode force: 4000 N, current passage time: 20 cycles (50 Hz), and hold time: 5 cycles (50 Hz). The current value was set to a current value at which the nugget diameter became 4.5√t (mm) based on the test for the appropriate current range. When the strength was greater than 5.5 kN, the cross tensile strength after resistance spot welding was defined as "good", and when the strength was less than 5.5 kN, the cross tensile strength after resistance spot welding was defined as "poor".

As listed in Table 3, the steel sheets satisfying the conditions of the present disclosure had a high level of formability (hole expansion formability) and weldability (wide range of appropriate current, cross tensile strength) combined with a tensile strength of 1450 MPa or more.

### [Table 1]

**Table 1**

| Steel sample ID | Chemical composition (mass%)* | | | | | | | | | | | | Value of A | Remarks |
|---|---|---|---|---|---|---|---|---|---|---|---|---|---|---|
| | C | Si | Mn | P | S | Al | N | Nb | Ti | B | Sb | Other components | | |
| A | 0.20 | 0.50 | 2.99 | 0.009 | 0.0010 | 0.03 | 0.002 | 0.012 | 0.022 | 0.0021 | - | - | 1.56 | Conforming steel |
| B | 0.16 | 1.20 | 2.44 | 0.010 | 0.0010 | 0.03 | 0.003 | 0.011 | 0.009 | 0.0015 | 0.004 | - | 2.34 | Conforming steel |
| C | 0.23 | 1.15 | 3.33 | 0.012 | 0.0024 | 0.03 | 0.003 | 0.025 | 0.018 | - | 0.014 | - | 3.71 | Conforming steel |
| D | 0.34 | 1.62 | 2.51 | 0.009 | 0.0010 | 0.03 | 0.003 | 0.016 | 0.022 | 0.0012 | 0.006 | - | 3.28 | Conforming steel |
| E | 0.23 | 0.29 | 3.12 | 0.010 | 0.0010 | 0.32 | 0.003 | - | 0.019 | 0.0015 | 0.004 | V:0.02, Cu:0.11, Ni:0.18 | 2.31 | Conforming steel |
| F | 0.32 | 1.41 | 3.22 | 0.010 | 0.0018 | 0.03 | 0.002 | 0.025 | 0.011 | 0.0009 | - | Cr:0.05, Mo:0.12, Sn:0.12 | 4.43 | Conforming steel |
| G | 0.20 | 1.20 | 2.88 | 0.009 | 0.0010 | 0.03 | 0.003 | 0.025 | - | 0.0042 | - | Ca:0.002, REM:0.002 | 1.21 | Conforming steel |
| H | 0.45 | 1.15 | 3.88 | 0.011 | 0.0019 | 0.03 | 0.003 | 0.015 | 0.021 | 0.0019 | 0.002 | - | 3.26 | Comparative steel |
| I | 0.22 | 0.25 | 2.25 | 0.012 | 0.0020 | 0.03 | 0.003 | 0.033 | 0.035 | 0.0035 | 0.011 | Cr:0.60 | 0.75 | Comparative steel |
| J | 0.37 | 1.56 | 3.33 | 0.010 | 0.0020 | 0.03 | 0.002 | 0.010 | 0.005 | 0.0008 | 0.003 | - | 6.60 | Comparative steel |
| K | 0.17 | 1.09 | 2.58 | 0.029 | 0.0003 | 0.15 | 0.007 | 0.068 | 0.005 | 0.0026 | 0.002 | - | 1.16 | Conforming steel |
| L | 0.21 | 1.68 | 2.66 | 0.006 | 0.0007 | 0.04 | 0.005 | 0.012 | 0.072 | 0.0015 | 0.005 | - | 1.75 | Conforming steel |

| | | | | | | | | | | | | | | |
|---|---|---|---|---|---|---|---|---|---|---|---|---|---|---|
| * The balance being Fe and inevitable impurity | | | | | | | | | | | | | | |

### [Table 2]

**Table 2**

| No. | Steel sample ID | Type | Production conditions | | | | | | | | | | | |
|---|---|---|---|---|---|---|---|---|---|---|---|---|---|---|
| | | | Cooling | Reheating | | Hot rolling | Cooling | Coiling | Annealing | | | | | Cooling after hot-dip coating |
| | | | Average cooling rate (°C/h) | Average heating temp. (°C) | Heating time (min) | Rolling finish temp. (°C) | Average cooling rate (°C/s) | Coiling temp. (°C) | Dew point (°C) | Average heating rate (°C/s) | Annealing temp. (°C) | Hold time (s) | Average cooling rate (°C/s) | Average cooling rate (°C/s) |
| 1 | A | GA | 120 | 1300 | 90 | 900 | 95 | 420 | -5 | 7 | 920 | 250 | 6 | 4 |
| 2 | B | GA | 120 | 1350 | 120 | 900 | 110 | 420 | -15 | 7 | 920 | 250 | 7 | 5 |
| 3 | C | GI | 120 | 1300 | 90 | 900 | 95 | 400 | -10 | 5 | 850 | 150 | 10 | 3 |
| 4 | D | EG | 105 | 1350 | 90 | 900 | 95 | 420 | 5 | 7 | 940 | 300 | 7 | - |
| 5 | E | GA | 120 | 1350 | 120 | 900 | 110 | 420 | -10 | 7 | 920 | 250 | 7 | 10 |
| 6 | F | GA | 120 | 1300 | 90 | 900 | 95 | 400 | -10 | 5 | 850 | 150 | 10 | 4 |
| 7 | G | CR | 105 | 1350 | 90 | 900 | 95 | 420 | 5 | 7 | 940 | 300 | 7 | - |
| 8 | A | GA | 120 | 1350 | 90 | 900 | 95 | 420 | -5 | 20 | 920 | 250 | 7 | 4 |
| 9 | C | GI | 120 | 1350 | 90 | 900 | 95 | 380 | -15 | 10 | 920 | 250 | 6 | 4 |
| 10 | H | GA | 120 | 1350 | 90 | 900 | 95 | 420 | -15 | 7 | 920 | 250 | 7 | 4 |
| 11 | I | GA | 120 | 1350 | 90 | 900 | 95 | 420 | -5 | 7 | 920 | 250 | 7 | 4 |
| 12 | J | GA | 120 | 1350 | 90 | 900 | 95 | 420 | -10 | 7 | 920 | 250 | 7 | 4 |
| 13 | C | GA | 30 | 1350 | 90 | 900 | 95 | 420 | -5 | 7 | 850 | 250 | 7 | 4 |
| 14 | D | EG | 120 | 1100 | 90 | 900 | 95 | 420 | -5 | 7 | 940 | 250 | 7 | - |
| 15 | A | GA | 120 | 1350 | 10 | 900 | 95 | 420 | -15 | 7 | 920 | 250 | 7 | 3 |
| 16 | B | GA | 120 | 1350 | 90 | 900 | 95 | 650 | -5 | 7 | 920 | 250 | 7 | 5 |
| 17 | C | GA | 120 | 1350 | 90 | 900 | 95 | 420 | -5 | 1 | 920 | 250 | 7 | 4 |
| 18 | D | CR | 120 | 1350 | 120 | 900 | 95 | 420 | -30 | 7 | 920 | 250 | 7 | - |
| 19 | D | GA | 120 | 1350 | 90 | 900 | 95 | 450 | -5 | 7 | 750 | 250 | 7 | 4 |
| 20 | A | GA | 110 | 1350 | 90 | 900 | 95 | 420 | -10 | 5 | 920 | 600 | 7 | 4 |
| 21 | B | GA | 120 | 1400 | 150 | 900 | 95 | 380 | -5 | 7 | 920 | 250 | 1 | 5 |
| 22 | A | GA | 120 | 1400 | 120 | 900 | 95 | 420 | -5 | 7 | 920 | 250 | 7 | 1 |
| 23 | K | GA | 110 | 1400 | 90 | 940 | 110 | 400 | 0 | 8 | 900 | 300 | 7 | 5 |
| 24 | L | GA | 110 | 1300 | 90 | 840 | 90 | 400 | 0 | 8 | 860 | 300 | 7 | 5 |

### [Table 3]

**Table 3**

| No. | Microstructure | | | | | | | | | Precipitate | Evaluation result | | | | Remarks |
|---|---|---|---|---|---|---|---|---|---|---|---|---|---|---|---|
| | 1/4 sheet thickness position | | | | | | | From surface to 7 µm depth | | Number density (per 100µm²) | Tensile properties | Hole expansion ratio | Resistance weldability | | |
| | Ferrite | | Retained austenite | | Martensite | | Residual microstructure * | Martensite | Ferrite | | TS (MPa) | (%) | Appropriate current range | Cross tensile strength | |
| | Volume fraction (%) | Average grain size (µm) | Volume fraction (%) | Average grain size (µm) | Volume fraction (%) | Average grain size (µm) | | Volume fraction (%) | Volume fraction (%) | | | | | | |
| 1 | 0 | - | 0 | - | 100 | 5 | - | 6 | 82 | 31 | 1507 | 34 | Good | Good | Example |
| 2 | 0 | - | 0 | - | 98 | 5 | - | 14 | 67 | 32 | 1561 | 31 | Good | Good | Example |
| 3 | 0 | - | 2 | 2.0 | 94 | 6 | B | 8 | 78 | 26 | 1504 | 33 | Good | Good | Example |
| 4 | 1 | 2 | 0 | - | 99 | 4 | - | 12 | 85 | 24 | 1731 | 30 | Good | Good | Example |
| 5 | 0 | - | 0 | - | 98 | 5 | B | 16 | 70 | 34 | 1533 | 31 | Good | Good | Example |
| 6 | 1 | 2 | 2 | 1.8 | 94 | 6 | B | 10 | 72 | 24 | 1504 | 33 | Good | Good | Example |
| 7 | 1 | 2 | 0 | - | 99 | 4 | - | 8 | 80 | 22 | 1485 | 35 | Good | Good | Example |
| 8 | 0 | - | 2 | 1.9 | 96 | 5 | B | 11 | 75 | 23 | 1501 | 33 | Good | Good | Example |
| 9 | 0 | - | 1 | 2.0 | 94 | 5 | B | 17 | 70 | 25 | 1522 | 41 | Good | Good | Example |
| 10 | 0 | - | 5 | 4.1 | 100 | 5 | - | 45 | 21 | 33 | 1603 | 22 | Poor | Poor | Comparative Example |
| 11 | 0 | - | 0 | - | 100 | 8 | - | 22 | 45 | 45 | 1488 | 18 | Poor | Poor | Comparative Example |
| 12 | 1 | 2 | 0 | - | 99 | 7 | - | 31 | 40 | 13 | 1501 | 25 | Poor | Poor | Comparative Example |
| 13 | 3 | 2 | 0 | - | 97 | 5 | - | 18 | 55 | 13 | 1511 | 26 | Good | Poor | Comparative Example |
| 14 | 7 | 5 | 0 | - | 93 | 6 | - | 19 | 56 | 18 | 1490 | 20 | Good | Poor | Comparative Example |
| 15 | 6 | 4 | 0 | - | 93 | 6 | B | 13 | 58 | 16 | 1503 | 22 | Good | Poor | Comparative Example |
| 16 | 0 | - | 0 | - | 100 | 7 | - | 20 | 54 | 12 | 1488 | 30 | Good | Poor | Comparative Example |
| 17 | 0 | - | 0 | - | 100 | 5 | - | 15 | 48 | 10 | 1510 | 28 | Good | Poor | Comparative Example |
| 18 | 0 | - | 0 | - | 100 | 6 | - | 88 | 2 | 26 | 1510 | 30 | Poor | Poor | Comparative Example |
| 19 | 16 | 4 | 0 | - | 84 | 5 | - | 16 | 50 | 22 | 1428 | 14 | Good | Good | Comparative Example |
| 20 | 0 | - | 0 | - | 100 | 6 | - | 18 | 58 | 14 | 1505 | 28 | Good | Poor | Comparative Example |
| 21 | 3 | 2 | 0 | - | 88 | 6 | B, P | 18 | 56 | 21 | 1391 | 17 | Good | Good | Comparative Example |
| 22 | 3 | 3 | 0 | - | 83 | 6 | B, P | 15 | 58 | 21 | 1268 | 22 | Good | Good | Comparative Example |
| 23 | 0 | - | 2 | 1.1 | 98 | 2 | - | 7 | 88 | 42 | 1523 | 31 | Good | Good | Example |
| 24 | 0 | - | 0 | - | 100 | 4 | - | 10 | 72 | 38 | 1544 | 36 | Good | Good | Example |

| | | | | | | | | | | | | | | | |
|---|---|---|---|---|---|---|---|---|---|---|---|---|---|---|---|
| * B: bainite, P: pearlite | | | | | | | | | | | | | | | |

## Claims

1. A steel sheet comprising a chemical composition containing, in mass%,
C: 0.18 % to 0.38 %,
Si: 0.2 % to 1.8 %,
Mn: 2.4 % to 3.5 %,
P: 0.03 % or less,
S: 0.003 % or less,
Al: 0.01 % to 0.50 %,
N: 0.008 % or less,
one or both of Nb: 0.005 % to 0.08 % and Ti: 0.005 % to 0.08 %, and
one or both of B: 0.0002 % to 0.0050 % and Sb: 0.001 % to 0.012 %,
with the balance being Fe and inevitable impurity, wherein
a value of A as defined by Expression (1) below is from 0.9 to 6.0,
microstructure at a 1/4 sheet thickness position satisfies the following conditions:
volume fraction of martensite: 93 % or more,
volume fraction of ferrite: 0 % to 5 %,
volume fraction of retained austenite: 0 % to 7 %,
average grain size of martensite: 7 µm or less,
average grain size of ferrite: 3 µm or less, and
average grain size of retained austenite: 3 µm or less,
microstructure in a range from a surface to a depth of 7 µm satisfies the following condition:
volume fraction of martensite: 0 % to 20 %, and
in a range of 50 µm to 100 µm in depth from a surface, a number density of Ti precipitates having a particle size of 0.005 µm or more to less than 0.10 µm and Nb precipitates having a particle size of 0.005 µm or more to less than 0.10 µm is 20/100 µm² or more, $A = \left(\left[C\right]+\left[Si\right]/8+\left[Mn\right]/20\right) / \left(2\times \left(\left[Ti\right]+\left[Nb\right]\right)+85\times \left(\left[B\right]+\left[Sb\right]/20\right)\right.$
where the square brackets in Expression (1) represent content in mass% of an element enclosed in the square brackets and have a value of 0 when the element is not contained.

2. The steel sheet according to claim 1, wherein the chemical composition further contains, in mass%, at least one selected from the group consisting of
V: 0.05 % or less,
Cu: 0.50 % or less,
Ni: 0.50 % or less,
Mo: 0.50 % or less,
Cr: 0.50 % or less,
Sn: 0.30 % or less,
Ca: 0.0050 % or less, and
REM: 0.0050 % or less.

3. The steel sheet according to claim 1 or 2, further comprising a zinc or zinc alloy coated or plated layer on at least one surface.

4. A resistance spot welding method of squeezing, by a pair of welding electrodes, a sheet combination including at least one sheet of the steel sheet according to any one of claims 1 to 3, and passing a current while applying an electrode force to join the sheet combination.

5. A resistance spot welded member including at least one sheet of the steel sheet according to any one of claims 1 to 3 in a sheet combination.

6. A method of producing a steel sheet, the method comprising:
continuous casting of molten steel having the chemical composition according to claim 1 or 2, to obtain a steel slab;
cooling the steel slab at an average cooling rate of 100 °C/h or more in a temperature range to 600 °C;
reheating the steel slab after the cooling by heating the steel slab to a reheating temperature of 1250 °C to 1450 °C and holding at the reheating temperature for a hold time of 60 min or more;
hot rolling the steel slab after the reheating under a set of conditions including a rolling finish temperature of 850 °C to 950 °C, to obtain a hot-rolled steel sheet;
cooling the hot-rolled steel sheet to a cooling stop temperature of 480 °C or less at an average cooling rate of 80 °C/s or more;
coiling the hot-rolled steel sheet after the cooling at a coiling temperature of 480 °C or less;
cold rolling the hot-rolled steel sheet to obtain a cold-rolled steel sheet; and
annealing the cold-rolled steel sheet in an atmosphere where the dew point is above -20 °C, where,
in the annealing, the cold-rolled steel sheet is
heated to an annealing temperature of 780 °C to 980 °C at an average heating rate from 3 °C/s to 30°C/s,
held at the annealing temperature for a hold time from 15 s to 360 s, and
cooled from the annealing temperature to room temperature at an average cooling rate of 3 °C/s or more.

7. The method of producing a steel sheet according to claim 6, the method further comprising electroplating the steel sheet after annealing to form a zinc or zinc alloy plated layer on at least one surface of the steel sheet.

8. A method of producing a steel sheet, the method comprising:
continuous casting of molten steel having the chemical composition according to claim 1 or 2 to obtain a steel slab;
cooling the steel slab at an average cooling rate of 100 °C/h or more in a temperature range to 600 °C;
reheating the steel slab after the cooling by heating the steel slab to a reheating temperature of 1250 °C to 1450 °C and holding at the reheating temperature for a hold time of 60 min or more;
hot rolling the steel slab after the reheating under a set of conditions including a rolling finish temperature of 850 °C to 950 °C, to obtain a hot-rolled steel sheet;
cooling the hot-rolled steel sheet to a cooling stop temperature of 480 °C or less at an average cooling rate of 80 °C/s or more;
coiling the hot-rolled steel sheet after the cooling at a coiling temperature of 480 °C or less;
cold rolling the hot-rolled steel sheet to obtain a cold-rolled steel sheet; and
annealing the cold-rolled steel sheet in an atmosphere where the dew point is above -20 °C;
hot-dip coating, in which the steel sheet after the annealing is immersed in a hot-dip coating bath, to form a zinc or zinc alloy coated layer on at least one surface of the steel sheet; and
cooling the steel sheet after the hot-dip coating to room temperature at an average cooling rate of 3 °C/s or more, where,
in the annealing, the cold-rolled steel sheet is
heated to an annealing temperature of 780 °C to 980 °C at an average heating rate from 3 °C/s to 30°C/s,
held at the annealing temperature for a hold time from 15 s to 360 s, and
cooled from the annealing temperature up to entry into the hot-dip coating bath at an average cooling rate of 3 °C/s or more.

9. The method of producing a steel sheet according to claim 8, wherein an alloying treatment is carried out after the hot-dip coating, prior to the cooling to room temperature.
